# EUROPEAN PATENT SPECIFICATION

(11) **EP 4 282 897 B1**
(45) Date of publication and mention of the grant of the patent: **10.12.2025**
(21) Application number: 22742314.2
(22) Date of filing: 19.01.2022
(51) Int. Cl.: C09K 11/06, B65D 1/02, C08G 63/183, C08G 63/199, G09F 3/00, H04L 9/08, H04L 9/32

(54) **FLUORESCENT AGGREGATES OF POLY(CYCLOHEXYLENE DIMETHYLENE TEREPHTHALATE), METHOD FOR OBTAINING SAME, AND USE THEREOF AS A PHYSICALLY UNCLONABLE LABEL FOR IDENTIFYING AND/OR TRACING PACKAGING FOR COSMETIC AND/OR PERFUME PRODUCTS**
FLUORESZENTE POLY(CYCLOHEXYLENDIMETHYLENTEREPHTHALAT), VERFAHREN ZU SEINER HERSTELLUNG UND SEINE VERWENDUNG ALS NICHT KLONBARES ETIKETT
AGRÉGATS FLUORESCENTS DE POLY(TÉRÉPHTALATE DE CYCLOHEXYLÈNEDIMÉTHYLE), PROCÉDÉ D'OBTENTION ET D'UTILISATION COMME ÉTIQUETTE PHYSIQUEMENT NON CLONABLE POUR IDENTIFIER ET/OU TRACER DES CONTENANTS POUR DES PRODUITS COSMÉTIQUES ET/OU DES PARFUMS

(30) Priority: 19.01.2021 ES 202130028
(43) Date of publication of application: 29.11.2023
(73) Proprietor: Consejo Superior De Investigaciones Científicas (CSIC), 28006 Madrid (ES); Inentia Arô, S.L., 28703 San Sebastián de los Reyes (Madrid) (ES)
(72) Inventor: LÓPEZ MANCHADO, Miguel Ángel, 28006 Madrid (ES); VERDEJO MÁRQUEZ, Raquel, 28006 Madrid (ES); HOYOS NÚÑEZ, Mario, 28006 Madrid (ES); ANDRINAL LÓPEZ, Daniel, 28703 San Sebastián de los Reyes (Madrid) (ES); CISNEROS DE LOS ARCOS, Ramón Ignacio, 28703 San Sebastián de los Reyes (Madrid) (ES); FERNÁNDEZ BENITO, Amparo, 28703 San Sebastián de los Reyes (Madrid) (ES)
(74) Representative: Pons IP
(86) International application number: PCT/ES2022/070023
(87) International publication number: WO 2022/157407

(56) References cited:
- EP-A1- 3 296 326
- WO-A1-2018/006389
- WO-A1-2020/097058
- CN-U- 208 093 035
- KR-A- 20170 015 733
- US-A1- 2014 008 576
- RIIKKA ARPPE, THOMAS JUST S?RENSEN: "Physical unclonable functions generated through chemical methods for anti-counterfeiting", NATURE REVIEWS CHEMISTRY, vol. 1, no. 4, pages 0031, XP055382550, DOI: 10.1038/s41570-017-0031

## Description

The present invention relates to spherical aggregates of semi-crystalline thermoplastic polyester, poly(cyclohexylene dimethylene terephthalate), with a size distribution of between 100 nm and 700 nm which emit fluorescence in the region of the visible spectrum and are deposited on a thermoplastic aromatic polyester or thermoplastic polyolefin substrate. The present invention further relates to the process for obtaining said aggregates and to the use of said aggregates as a physically unclonable label, for identifying and/or tracing packaging for cosmetic and/or perfume products.

Therefore, the present invention may be comprised within the field of anti-counterfeit packaging, particularly in the field of anti-counterfeit packaging for cosmetic and/or perfume products.

### BACKGROUND OF THE INVENTION

The latest data from the Organization for Economic Cooperation and Development (OECD) reveals the exponential growth of counterfeits around the world. In 2018, international counterfeit and pirated trade accounted for 2.7% of trade worldwide (compared to 1.9% in 2005). In total, they represent about 500 billion Euros; roughly the equivalent of Austria's GDP. During the year 2018, counterfeiting and piracy caused losses of 85 billion Euros and 800,000 jobs in the European Union, reaching more than 8.8 billion Euros and 98,500 direct employments in Spain. Therefore, there are serious counterfeiting problems that threaten the health and safety of society, with significant economic consequences.

At present there is a wide variety of packaging for cosmetics and perfumery. The designs are in accordance with the type of product they contain, making them suitable for better preserving the cosmetics, showing a better appearance, and being more appealing to the public.

The most widely used materials in cosmetic packaging belong to the family of aromatic polyesters because they have excellent characteristics such as a high mechanical strength, chemical resistance, and transparency, which makes them suitable to enable storing cosmetics and perfumes. Compared to glass, materials belonging to the family of aromatic polyesters are cost-effective and malleable; being very versatile materials that allow obtaining packaging of different shapes and finishes. Furthermore, due to its low weight, packaging composed of this family of aromatic polyesters is easy and cost-effective to transport, and in turn complies with the collection and recycling system effectively.

To talk about cosmetic and perfume traceability is to talk about safety. In order to achieve suitable protection of a product (in this case a packaging), good traceability from the origin to the consumer is necessary, in such a way as to ensure that the product (packaging) is not a counterfeit, that it is in good condition, and that it is not harmful to health, in other words, it meets the legal requirements for placement on the market. Furthermore, brand control by means of traceability of cosmetic and perfume products is essential to prevent economic losses and a loss of brand image.

Therefore, there is a need to develop undetectable systems in the fight against counterfeiting, particularly against the counterfeiting of cosmetic and perfume packaging.

Products, such as packaging materials, marked with an organic luminescent material for anti-counterfeiting are known from US2014008576.

### DESCRIPTION OF THE INVENTION

Incorporating counterfeit labels into products having physically unclonable functions (PUFs) is a promising solution for product authentication. Physically unclonable functions (PUFs) are unique random physical labeling patterns that cannot be copied and must be manufactured by means of a stochastic process which, if read with a suitable analytical tool, can be recorded and stored. The present invention relates to the incorporation of fluorescent markers emitting in the region of the visible spectrum as a physically unclonable label for packaging of cosmetic and/or perfume products, in other words, for achieving traceability/identification of said packaging.

Specifically, the first aspect of the present invention relates to transparent spherical aggregates deposited on a substrate consisting of a thermoplastic aromatic polyester or a thermoplastic polyolefin (hereinafter, the aggregates of the invention) characterized by
- being composed of semi-crystalline thermoplastic polyester, poly(cyclohexylene dimethylene terephthalate)
- having a size distribution of between 100 nm and 700 nm
- and emitting fluorescence in the region of the visible spectrum corresponding to wavelengths of between 380nm and 526nm (blue), 493 nm and 585 nm (green), and between 585 nm and 710 nm (red), when irradiated at excitation wavelengths selected from 405 nm, 488 nm, and 561 nm, respectively.

In the present invention, the substrate consists of a thermoplastic aromatic polyester or thermoplastic polyolefin.

In a second aspect, the present invention relates to a method for obtaining the aggregates of the present invention (hereinafter, the method of the invention), characterised in that it comprises the following steps:
a) dissolving semi-crystalline thermoplastic polyester of poly(cyclohexylene dimethylene terephthalate) in the form of pellet,
b) pouring the solution obtained in step (a) over a methanol solution at room temperature under magnetic stirring,
c) collecting the precipitate formed in step (b) by means of filtration using a membrane having a pore size of between 0.2 µm and 0.5 µm,
d) washing and drying the particles obtained in step (c),
e) dispersing the particles obtained in step (d) in ethanol, wherein the concentration of the particles in the dispersion is between 0.001 g/l and 1 g/l, and
f) depositing the dispersion obtained in step (e) on a substrate consisting of a thermoplastic aromatic polyester or a thermoplastic polyolefin.

Step (a) of the method of the invention refers to dissolving semi-crystalline thermoplastic polyester, poly(cyclohexylene dimethylene terephthalate), in the form of pellet. Examples of solvents which can be used in this step (a) are
- dimethylsulfoxide (DMSO),
- acids selected from the list consisting of trifluoroacetic acid (TFA), trichloroacetic acid (TCA), or the combination thereof,
- a combination of chloroform and acids selected from the list consisting of trifluoroacetic acid (TFA), trichloroacetic acid (TCA), or the combination thereof,
- dimethylformamide (DMF),
- a combination of dimethylformamide (DMF) and acids selected from the list consisting of trifluoroacetic acid (TFA), trichloroacetic acid (TCA), or the combination thereof,
- 1,1,1,3,3,3-hexafluoro-2-propanol, and
- chlorophenols selected from 2-chlorophenol and 4-chlorophenol.

The temperature at which step (a) of the method is carried out is determined by the solvent used. For example, for acids and combinations thereof, the preferred temperature ranges are those corresponding to room temperature of between 18°C and 27°C; however, for DMSO, the temperature range is higher, Of between room temperature (between 18°C and 27°C) and 260°C.

The solution obtained in step (a) is poured over a methanol solution which is at room temperature and under magnetic stirring, forming a precipitate. Said precipitate is collected by means of filtration using a membrane having a pore size of between 0.2 µm and 0.5 µm in step (c), thereby separating particles with a size larger than the pore size of the membrane.

In step d), the particles obtained in step (c) are washed at room temperature (between 18°C and 27°C) and dried. Drying can be carried out at room temperature (between 18°C and 27°C) for long periods of time up to 72 h or under vacuum, wherein the periods of time are reduced to a value below 12 h. The maximum temperature at which drying can be carried out is the boiling temperature of methanol, i.e., 65°C, with or without vacuum.

Step (e) refers to the dispersion of the particles obtained in step (d) in ethanol, wherein the concentration of the particles in the dispersion is between 0.001 g/l and 1 g/l, and step (f) refers to the deposition of the dispersion obtained in step (e) on a substrate consisting of a thermoplastic aromatic polyester or a thermoplastic polyolefin.

In a preferred embodiment of the method of the invention, deposition on a substrate comprising a thermoplastic aromatic polyester or a thermoplastic polyolefin of step (f) is carried out by means of the spray-coating technique, the bar-coating technique, the spin-coating technique, the slot-die coating technique, the inkjet printing technique, the drop coating technique, the electronic thermal printing technique, or the in-mold labeling technique.

In a third aspect, the present invention relates to the use (hereinafter, the use of the invention) of
- the aggregates of the present invention
   as a physically unclonable label, for identifying and/or tracing transparent packaging for cosmetic and/or perfume products
- of thermoplastic aromatic polyester selected from the list consisting of poly(cyclohexylene dimethylene terephthalate) or poly(ethylene terephthalate)
- or of thermoplastic polyolefin selected from the list consisting of polypropylene and polyethylene,
   wherein the aggregates of the invention
- are embedded in the packaging, and/or
- are deposited on an outer and/or inner surface of the packaging.

It should be indicated that the introduction of the aggregates of the invention in a transparent packaging for cosmetic and/or perfume products
- of thermoplastic aromatic polyester selected from the list consisting of poly(cyclohexylene dimethylene terephthalate) or poly(ethylene terephthalate)
- or of thermoplastic polyolefin selected from the list consisting of polypropylene and polyethylene,
does not interfere with the transparency of said packaging. The packaging which incorporates said aggregates is transparent, in other words, the incorporation of the aggregates in the packaging is not visually detectable.

In a preferred embodiment of the use of the invention, said use refers to the use of
- the aggregates of the present invention
   for identifying and/or tracing transparent packaging for cosmetic and/or perfume products
- polypropylene or thermoplastic aromatic polyester selected from poly(cyclohexylene dimethylene terephthalate), or poly(ethylene terephthalate) and derivatives thereof,
- or of thermoplastic polyolefin selected from the list consisting of polypropylene, polyethylene, and derivatives thereof,
   wherein the aggregates
- are embedded in the packaging, and
- are deposited on an outer and/or inner surface of the packaging,
and wherein the percentage by weight of the plurality of aggregates is less than 1% in the packaging.

The aggregates of the invention being able to be embedded in the packaging, and in turn deposited on an outer and/or inner surface of the packaging, represents an advantage given that, since said aggregates have a high quantum yield that entails a high photoluminiscence, they can be accommodated inside the material constituting the packaging without losing detection efficiency, and furthermore preventing contact with external oxidizing agents or different internal pH upon coming into contact with the product,.
- The surface presence of the aggregates of the invention in the packaging facilitates its processing at industrial level, as well as detection limits during the recognition and analysis of their photoluminiscent emission during signal coding and traceability protocol.
- The presence of the aggregates of the invention inside the packaging allows developing a complex signal coding system using some of the properties or functionalities of the fluid existing inside the packaging and emitting the photoluminiscent signal which allows the detection and specific coding thereof in the form of an unclonable pattern as new traceability and security system.

For the identification and/or traceability of the fluorescent aggregates of the invention, in other words, which emit fluorescence in the region of the visible spectrum corresponding to wavelengths of between 380 nm and 526 nm (blue), 493 nm and 585 nm (green), and between 585 nm and 710 nm (red), when they are excited at excitation wavelengths selected from 405 nm, 488 nm, and 561 nm, respectively, conventional spectroscopy techniques such as UV-vis absorption, fluorimetry, or infrared can be used. These techniques allow knowing both the absorption/emission wavelengths and the intensity thereof.

Some techniques for detecting fluorescent species allow calculating the time of the fluorescence lifetime which allows determining with greater precision the emitting species, and in turn the fluorescence decay time or lifetime. The time-correlated single-photon counting technique (TCSPC) is a technique which can be easily used for identifying the fluorescent aggregates of the invention. More specifically, a high-speed electronic photon counter with a resolution of several pixels capable of detecting light at extremely low levels provides excellent characteristics for counting photons with maximum performance. The smaller size of the intensifier tube (8-18 mm), its immunity to magnetic fields up to 3 Teslas, its quick transfer time (40 ps), and the possibility of coupling a photocathode, make it an optimal tool for the traceability/identification of packaging.

Another technique for detecting the fluorescence of the aggregates of the invention could be flash photolysis spectroscopy which uses silicon photodiodes as detectors.

The percentage by weight of the aggregates of the invention in the packaging is less than 1%. The introduction of the aggregates of the invention does not influence the chemical resistance properties of the packaging, since they are present in a minor proportion.

In a more preferred embodiment of the use of the invention, the packaging is made of poly(cyclohexylene dimethylene terephthalate). The composition of the packaging and the composition of the aggregates of the invention being the same represents an advantage, given that recycling is facilitated; extraction or separation processes of the aggregates prior to recycling process, as occurs with fluorescent additives or loads differ from the composition of the packaging, are prevented.

The multilayer technique uses different sheets of thermoplastic aromatic polyester or thermoplastic polyolefin to form a packaging, putting an adhesive between them and thereby creating a sandwich-type structure. Said sheets can then be formed to give them the desired design. In another preferred embodiment of the use of the present invention, the aggregates of the invention which are deposited on a substrate sheet of thermoplastic aromatic polyester or thermoplastic polyolefin are embedded in the packaging by means of multilayer techniques. The aggregates of the invention being embedded in the packaging represent an advantage, given that non-interaction with the cosmetic or perfume product and the impossibility of detachment are ensured.

The aggregates of the invention are deposited on an outer or inner surface of the packaging
- of thermoplastic aromatic polyester selected from the list consisting of poly(cyclohexylene dimethylene terephthalate), poly(ethylene terephthalate), and derivatives thereof,
- or of thermoplastic polyolefin selected from the list consisting of polypropylene, polyethylene, and derivatives thereof,
by means of spraying techniques.

The aggregates of the invention can be deposited on an outer or inner surface of the packaging at industrial level by means of spraying techniques. Therefore, in another preferred embodiment of the use of the present invention, the aggregates of the invention are deposited on an outer or inner surface by means of the spray-coating technique, the bar-coating technique, the spin-coating technique, the slot-die coating technique, the inkjet printing technique, the drop coating technique, and the electronic thermal printing technique.

Another technique for the aggregates of the invention to be on the outer or inner surface of the packaging would the in-mold labeling technique which consists of previously depositing the aggregates of the invention inside a mold by means of spraying (random deposition) or by means of inkjet printing (controlled deposition) and then adding
- thermoplastic aromatic polyester selected from the list consisting of poly(cyclohexylene dimethylene terephthalate), poly(ethylene terephthalate), and derivatives thereof
- or thermoplastic polyolefin selected from the list consisting of polypropylene, polyethylene, and derivatives thereof,
in molten state into the mold. During the polyester cooling and hardening process, the aggregates of the invention are on the outer and/or inner surface of the packaging depending on whether the packaging is formed as a single piece or as a piece composed of parts. This in-mold labeling technique is advantageous given that it allows developing a double security system, arranging the aggregates both on the outer face and on the inner face. It should be indicated that the in-mold labeling technique can be used in conjunction with injection molding, blow injection, or thermoforming processes. Therefore, in another preferred embodiment of the use of the invention, the aggregates of the invention are deposited on an inner and outer surface of the packaging by means of the in-mold labeling technique.

Throughout the description and the claims, the word "comprises" and its variants do not intend to exclude other technical features, additives, components or steps. For those skilled in the art, other objects, advantages and features of the invention may be partially deduced from both the description and the embodiment of the invention. The following examples and figures are provided by way of illustration and are not intended to limit the present invention.

### BRIEF DESCRIPTION OF THE FIGURES

**Figure 1** shows the infrared spectroscopy (ATR-FTIR) spectra of the PCT polymer and PCT nanoparticles.
**Figure 2** shows the differential scanning calorimetry (DSC) curves of the PCT polymer and PCT nanoparticles.
**Figure 3** shows the UV-vis and PL spectra (λ_{exc.}= 385 nm) in chloroform (a); and PL spectra at different excitation wavelengths in chloroform (b).
**Figure 4** shows SEM micrographs of films made of the PCT polymer (a) and PCT nanoparticles processed in ethanol (1 g/l) (b and c). The micrographs correspond to magnifications of between x50 and x8000. The graph shows the histogram of the size of the PCT nanoparticles shown in the micrographs (d).
**Figure 5** shows images obtained by means of confocal fluorescence microscopy for (a) film made of PCT polymer without excitation or brightfield microscopy (DIC); (b) film made of the PCT polymer with PCT aggregates which emit fluorescence in the region of the blue, green, and red spectrum visible when an excitation wavelength of 405 nm (c), 488 nm (d), and 561 nm (e), respectively.
**Figure 6** shows images obtained by means of confocal fluorescence microscopy corresponding to an excitation wavelength of 405 nm with the following results: absence of fluorescence emission in the film made of the PCT polymer (a), a blue fluorescence emission if it is directly excited on the PCT aggregates (b), and through the film made of the PCT polymer (c).
**Figure 7** shows the film made of PCT (left); film made of PCT with PCT aggregates (right).

### EXAMPLES

Next, the invention will be illustrated by means of assays carried out by the inventors that demonstrate the effectiveness of the product of the invention.

### Preparation method

Particles are prepared by means of re-precipitation techniques. To that end, 1 gram of the semi-crystalline thermoplastic polyester, poly(cyclohexylene dimethylene terephthalate) (PCT), in the form of pellet (Eastman AN014) is dissolved in 50 milliliters of dimethylsulfoxide (DMSO) at 190 °C and left under magnetic stirring for 1 hour. Next, the hot solution is slowly poured into a beaker containing 500 milliliters of methanol at room temperature under vigorous magnetic stirring. The white precipitate is collected using a nylon 66 filtration membrane having a pore size of 0.45 µm, washed with 250 milliliters of methanol, and dried under vacuum at room temperature for 12 hours.

### Characterization of PCT particles

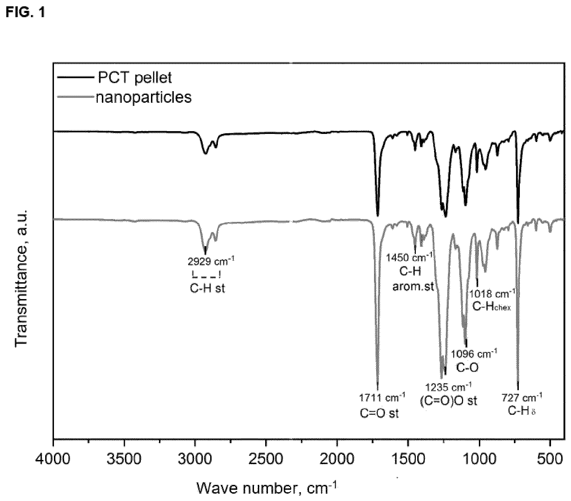

Infrared spectroscopy (ATR) using a Perkin Elmer Spectrum One Fourier transform infrared spectrometer was used to perform qualitative study at the compositional level of the prepared PCT particles, performing scanning from 400 cm⁻¹ up to 4000 cm⁻¹ with a resolution of 1 cm⁻¹. In Figure 1, the vibration bands of the chemical groups belonging to the PCT polymer chain are identified. Furthermore, Figure 1 shows the infrared spectrum of the PCT polymer in the forms of pellet provided by the industry (Eastar^{™} Copolyester AN014 from Eastman Chemical Company), where it can be seen that the vibration bands are the same.

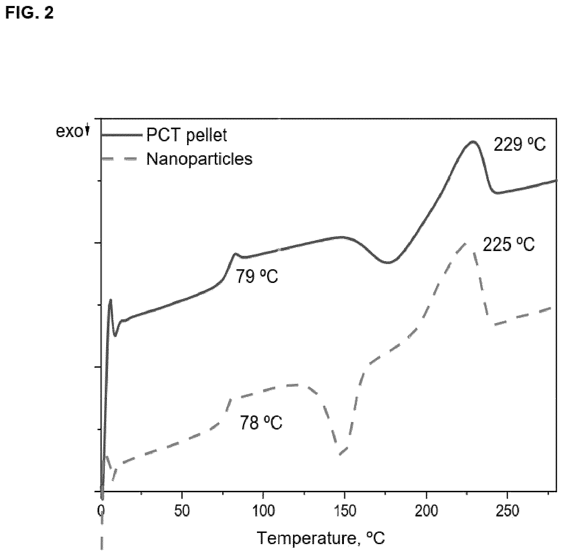

The thermal properties of PCT particles were studied by means of differential scanning calorimetry (DSC) with a Netzsch DSC 214 calorimeter with standardized aluminum sample holders and lids. Samples (5-10 mg) were analyzed in a N₂ atmosphere from 0°C to 290°C, at a speed of 10°C/min, as shown in Figure 2. Measurements were performed by heating from 0 °C up to 290 °C at a heating speed of 10 °c/min. First, the temperature is lowered to 0 °c, then the first heating is performed up to 290 °C, which allows eliminating the thermal history of the material. Subsequently, the temperature is lowered back to 0 °C and heating is again performed up to 290 °C.

From the differential scanning calorimetry (DSC) curves obtained, glass transition temperature (Tg) values of 78-79 °C and melting temperature (Tf) of 225 °C are obtained.

Comparing the results obtained for the PCT particles with the pelleted PCT polymer, it is concluded that the glass transition temperature (Tg) values are almost identical and that the melting temperature is 4 °C lower for the PCT particles (225 °C), being 229 °C for the pelleted PCT polymer.

The values obtained do not represent any drawback at industrial level when it comes to treating the nanoparticles with the molten PCT polymer, as explained in more detail in the in-molding type processing techniques.

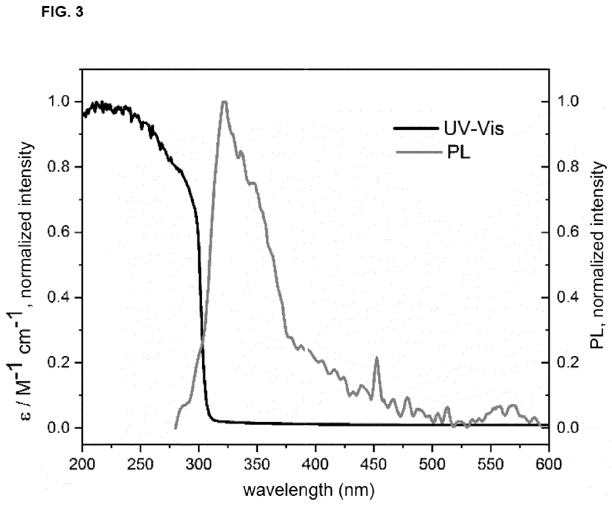

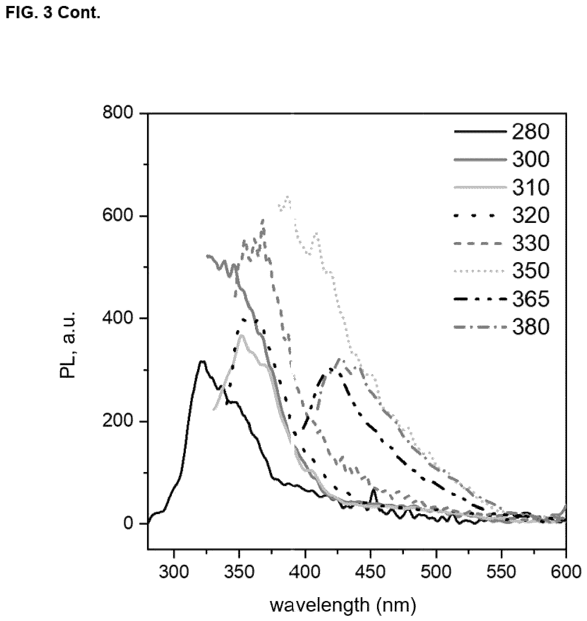

The photophysical properties of the synthesized PCT particles were analyzed by means of UV-visible (UV-vis) and fluorescence (PL) spectroscopies (Figure 3).

From the spectra obtained by exciting the nanoparticles at different wavelengths using fluorescence spectroscopy, the bathochromic shift (towards higher wavelengths) of the emission band is observed due to the appearance of new active species in fluorescence due to the induced aggregation state of the PCT nanoparticles.

### Deposition of PCT particles on a PCT sheet

Next, 1 gram of PCT particles is dispersed in 1 liter of ethanol in an Elmasonic S40H ultrasonic bath at room temperature for 5 minutes. The dispersion is deposited by means of spraying on a single face of a PCT film, allowing the solvent to evaporate for at least 12 hours, obtaining PCT aggregates that are deposited on the PCT film.

The geometry and sizes of said PCT aggregates are studied by environmental scanning electron microscopy (SEM), as well as by diffraction through light scattering (DLS) in Malvern ZetasizerNano-ZS90 equipment. The studies performed have allowed observing a spherical type aggregate morphology in the nanometer range (160-200 nm), although some aggregates of micrometric order can also be found in an isolated manner.

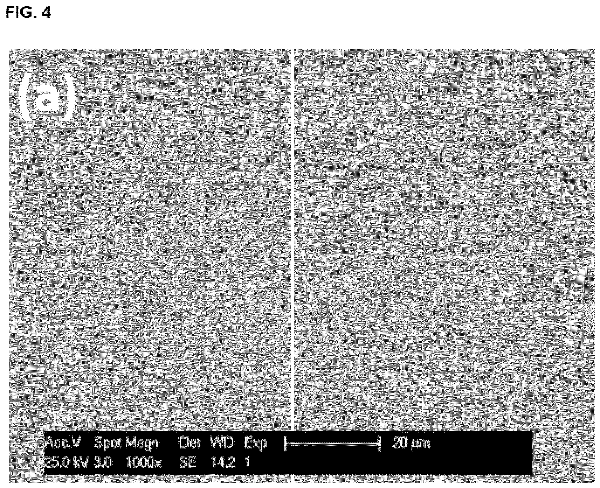

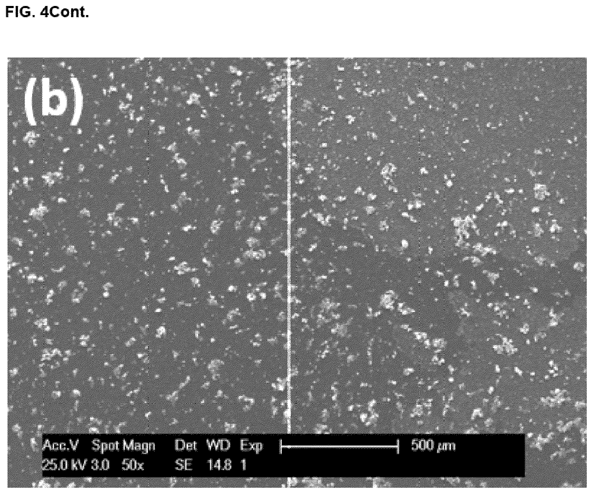

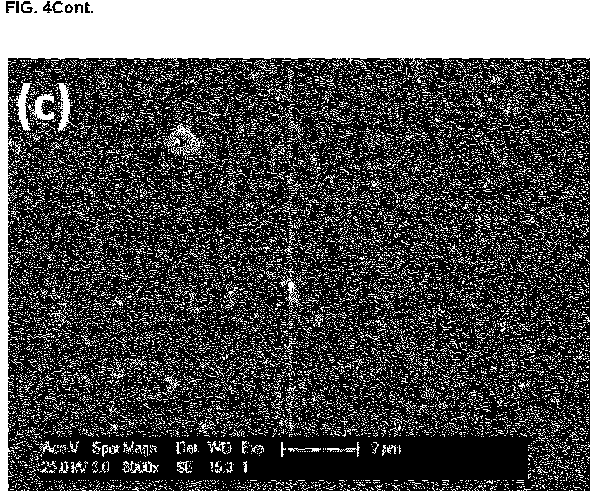

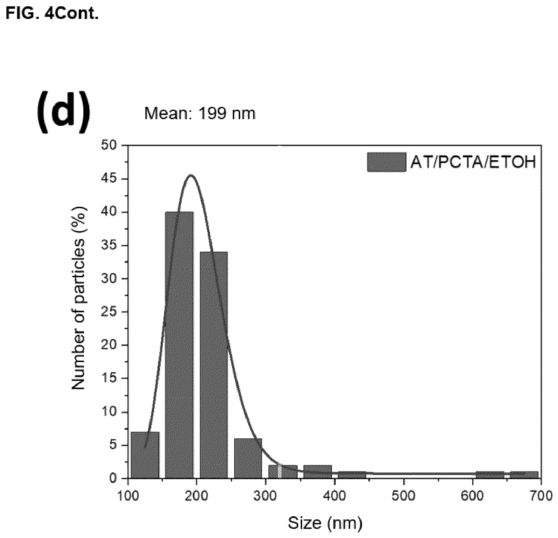

Figure 4 shows the micrographs obtained by SEM of the PCT nanoparticles sprayed on a film made of the same material (PCT) using ethanol as a solvent.

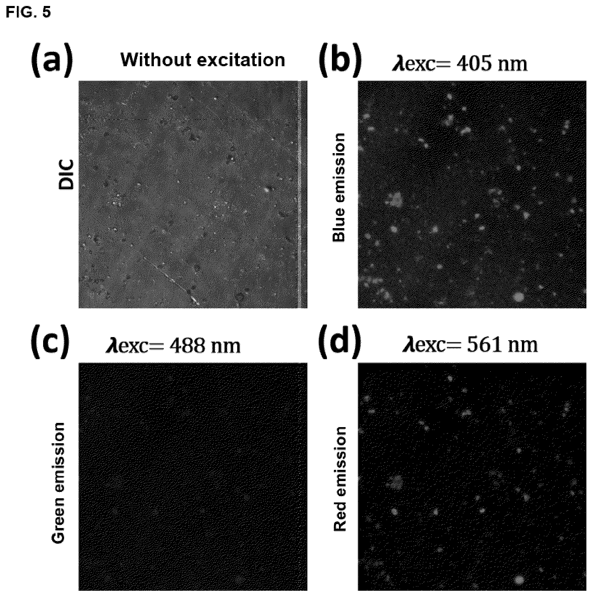

Once the PCT particles were deposited on a PCT film by means of spray coating using an airbrush, the photophysical properties of the aggregates obtained were studied by fluorescence confocal microscopy (Figure 5).

From the images appearing in Figure 5, two main results can be highlighted:
i) the total absence of fluorescence on the part of the PCT film, the measurement of which was performed in areas of the film that do not comprise PCT aggregates, and;
ii) depending on the excitation wavelength, the PCT aggregates deposited on the PCT film emit in different zones of the visible spectrum. Using excitation lengths of 405, 488, and 561 nm, emissions are collected in the blue, green, and red, respectively.

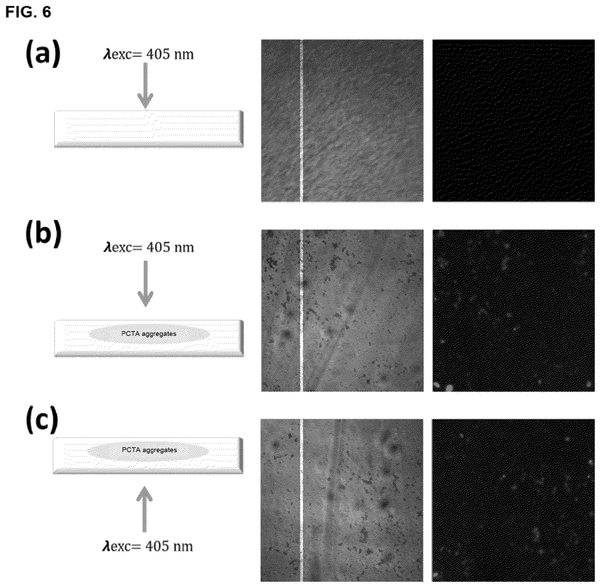

The dependence of the luminescence of the packaging has also been studied as a function of the face on which irradiation is carried out; in other words, irradiating the aggregates directly, or on the opposite face, irradiating the aggregates through the PCT polymer film (Figure 6). As a result of the experiment, the same luminescence response was observed by irradiating both faces.

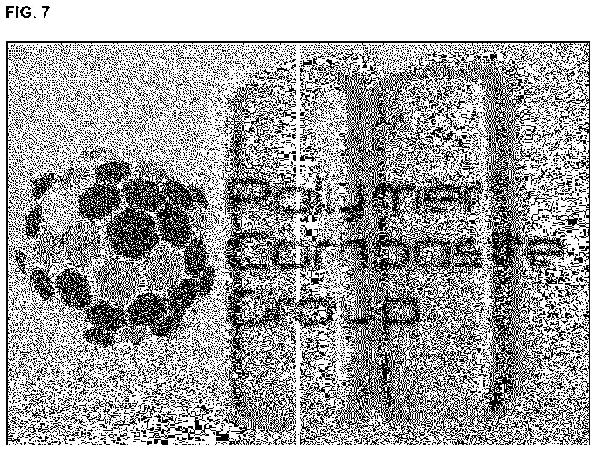

The introduction of PCT aggregates maintains the actual transparency of the PCT film, resulting in a system that would not be detected visually (Figure 7). Furthermore, by having the same composition and being the aggregates in a percentage by weight less than 1%, the chemical resistance properties of the sheet are maintained.

## Claims

1. Transparent spherical aggregates deposited on a substrate consisting of a thermoplastic aromatic polyester or a thermoplastic polyolefin, **characterized by**
• being composed of semi-crystalline thermoplastic polyester, poly(cyclohexylene dimethylene terephthalate),
• having a size distribution of between 100 nm and 700 nm,
• and emitting fluorescence in the region of the visible spectrum corresponding to wavelengths of between 380 nm and 526 nm, 493 nm and 585 nm, and between 585 nm and 710 nm, when they are excited at excitation wavelengths selected from 405 nm, 488 nm, and 561 nm, respectively.

2. A method for obtaining the transparent spherical aggregates on a substrate comprising a thermoplastic aromatic polyester or a thermoplastic polyolefin according to claim 1, **characterised in that** it comprises the following steps:
a) dissolving semi-crystalline thermoplastic polyester of poly(cyclohexylene dimethylene terephthalate) in the form of pellet,
b) pouring the solution obtained in step (a) over a methanol solution at room temperature under magnetic stirring,
c) collecting the precipitate formed in step (b) by means of filtration using a membrane having a pore size of between 0.2 µm and 0.5 µm,
d) washing and drying the particles obtained in step (c),
e) dispersing the particles obtained in step (d) in ethanol, wherein the concentration of the particles in the dispersion is between 0.001 g/l and 1 g/l, and
f) depositing the dispersion obtained in step (e) on a substrate comprising a thermoplastic aromatic polyester or a thermoplastic polyolefin.

3. The method according to claim 2, wherein the deposition on a substrate comprising a thermoplastic aromatic polyester or a thermoplastic polyolefin of step (f) is carried out by means of the spray-coating technique, the bar-coating technique, the spin-coating technique, the slot-die coating technique, the inkjet printing technique, the drop coating technique, the electronic thermal printing technique, or the in-mold labeling technique.

4. Use of
• a plurality of transparent spherical aggregates according to claim 1, as a physically unclonable label, for identifying and/or tracing transparent packaging for cosmetic and/or perfume products
• of thermoplastic aromatic polyester selected from the list consisting of poly(cyclohexylene dimethylene terephthalate), poly(ethylene terephthalate), and derivatives thereof
• or of thermoplastic polyolefin selected from the list consisting of polypropylene, polyethylene, and derivatives thereof,
wherein said plurality of aggregates
• are embedded in the packaging, and/or
• are deposited on an outer and/or inner surface of the packaging and wherein the percentage by weight of the plurality of aggregates is less than 1% in the packaging.

5. Use according to claim 4, wherein the packaging is made of poly(cyclohexylene dimethylene terephthalate).

6. Use according to any of claims 4 to 5, wherein the plurality of transparent spherical aggregates is embedded in the packaging by means of multilayer techniques.

7. Use according to any of claims 4 to 5, wherein the plurality of transparent spherical aggregates is deposited on an outer or inner surface of the packaging by means of the spray-coating technique, the bar-coating technique, the spin-coating technique, the slot-die coating technique, the inkjet printing technique, the drop coating technique, the electronic thermal printing technique, or the in-mold labeling technique.

8. Use according to claim 7, wherein the plurality of transparent spherical aggregates is deposited on an inner and outer surface of the packaging by means of the in-mold labeling technique.

## Patentansprüche

1. Durchsichtige kugelförmige Aggregate, die auf einem Substrat abgelagert sind, das aus einem thermoplastischen aromatischen Polyester oder einem thermoplastischen Polyolefin besteht, **dadurch gekennzeichnet, dass**
• sie aus halbkristallinem thermoplastischem Polyester, Poly(cyclohexylendimethylenterephthalat), bestehen,
• eine Größenverteilung zwischen 100 nm und 700 nm aufweisen
• und eine Fluoreszenz im Bereich des sichtbaren Spektrums entsprechend Wellenlängen zwischen 380 nm und 526 nm, 493 nm und 585 nm und zwischen 585 nm und 710 nm emittieren, wenn sie bei Anregungswellenlängen, die aus 405 nm, 488 nm bzw. 561 nm ausgewählt sind, angeregt werden.

2. Verfahren zum Erhalten der durchsichtigen kugelförmigen Aggregate auf einem Substrat, das einen thermoplastischen aromatischen Polyester oder ein thermoplastisches Polyolefin umfasst, nach Anspruch 1, **dadurch gekennzeichnet, dass** es die folgenden Schritte umfasst:
a) Lösen von halbkristallinem thermoplastischem Polyester, Poly(cyclohexylendimethylenterephthalat), in Form eines Pellets,
b) Gießen der in Schritt (a) erhaltenen Lösung über eine Methanollösung bei Raumtemperatur unter magnetischem Rühren,
c) Sammeln des in Schritt (b) gebildeten Niederschlags mittels Filtration unter Verwendung einer Membran, die eine Porengröße zwischen 0,2 µm und 0,5 µm aufweist,
d) Waschen und Trocknen der in Schritt (c) erhaltenen Teilchen,
e) Dispergieren der in Schritt (d) erhaltenen Teilchen in Ethanol, wobei die Konzentration der Teilchen in der Dispersion zwischen 0,001 g/l und 1 g/l liegt, und
f) Ablagern der in Schritt (e) erhaltenen Dispersion auf einem Substrat, das einen thermoplastischen aromatischen Polyester oder ein thermoplastisches Polyolefin umfasst.

3. Verfahren nach Anspruch 2, wobei die Ablagerung auf einem Substrat, das einen thermoplastischen aromatischen Polyester oder ein thermoplastisches Polyolefin umfasst, aus Schritt (f) mittels der Sprühbeschichtungstechnik, der Stabbeschichtungstechnik, der Rotationsbeschichtungstechnik, der Schlitzdüsenbeschichtungstechnik, der Tintenstrahldrucktechnik, der Tropfenbeschichtungstechnik, der elektronischen Thermodrucktechnik oder der Hinterspritztechnik durchgeführt wird.

4. Verwendung von
• einer Vielzahl durchsichtiger kugelförmiger Aggregate nach Anspruch 1 als physisch nicht klonierbares Etikett zur Identifizierung und/oder Rückverfolgung durchsichtiger Verpackungen für Kosmetik- und/oder Parfumprodukte
• thermoplastischem aromatischem Polyester, ausgewählt aus der Liste, die aus Poly(cyclohexylendimethylenterephthalat), Polyethylenterephthalat und Derivaten davon besteht, oder
• thermoplastischem Polyolefin, ausgewählt aus der Liste, die aus Polypropylen, Polyethylen und Derivaten davon besteht,
wobei die Vielzahl von Aggregaten
• in die Verpackung eingebettet ist und/oder
• auf einer äußeren und/oder inneren Oberfläche der Verpackung abgelagert ist
und wobei der Gewichtsprozentsatz der Vielzahl von Aggregaten in der Verpackung weniger als 1 % beträgt.

5. Verwendung nach Anspruch 4, wobei die Verpackung aus Poly(cyclohexylendimethylenterephthalat) hergestellt ist.

6. Verwendung nach einem der Ansprüche 4 bis 5, wobei die Vielzahl der durchsichtigen kugelförmigen Aggregate mittels Mehrschichttechniken in die Verpackung eingebettet wird.

7. Verwendung nach einem der Ansprüche 4 bis 5, wobei die Vielzahl der durchsichtigen kugelförmigen Aggregate auf einer äußeren oder inneren Oberfläche der Verpackung mittels der Sprühbeschichtungstechnik, der Stabbeschichtungstechnik, der Rotationsbeschichtungstechnik, der Schlitzdüsenbeschichtungstechnik, der Tintenstrahldrucktechnik, der Tropfenbeschichtungstechnik, der elektronischen Thermodrucktechnik oder der Hinterspritztechnik abgelagert wird.

8. Verwendung nach Anspruch 7, wobei die Vielzahl der durchsichtigen kugelförmigen Aggregaten auf einer inneren und äußeren Oberfläche der Verpackung mittels der Hinterspritztechnik abgelagert wird.

## Revendications

1. Agrégats sphériques transparents déposés sur un substrat constitué d'un polyester aromatique thermoplastique ou d'une polyoléfine thermoplastique, **caractérisé par**
• étant composé de polyester thermoplastique semi-cristallin, poly(téréphtalate de cyclohexylène diméthylène),
• ayant une distribution de taille comprise entre 100 nm et 700 nm,
• et émettant une fluorescence dans la région du spectre visible correspondant à des longueurs d'onde comprises entre 380 nm et 526 nm, 493 nm et 585 nm, et entre 585 nm et 710 nm, lorsqu'ils sont excités à des longueurs d'onde d'excitation choisies à partir de 405 nm, 488 nm, et 561 nm, respectivement.

2. Procédé d'obtention des agrégats sphériques transparents sur un substrat comprenant un polyester aromatique thermoplastique ou une polyoléfine thermoplastique selon la revendication 1, **caractérisé en ce qu'**il comprend les étapes suivantes:
a) dissolution du polyester thermoplastique semi-cristallin de poly(téréphtalate de cyclohexylène diméthylène) sous la forme de granulés,
b) versement de la solution obtenue à l'étape (a) sur une solution de méthanol à température ambiante sous agitation magnétique,
c) recueil du précipité formé à l'étape (b) par filtration à l'aide d'une membrane ayant taille des pores comprise entre 0,2 µm et 0,5 µm,
d) lavage et séchage des particules obtenues à l'étape (c),
e) dispersion des particules obtenues à l'étape (d) dans de l'éthanol, dans lequel la concentration des particules dans la dispersion est comprise entre 0,001 g/l et 1 g/l, et
f) dépôt de la dispersion obtenue à l'étape (e) sur un substrat comprenant un polyester aromatique thermoplastique ou une polyoléfine thermoplastique.

3. Procédé selon la revendication 2, dans lequel le dépôt sur un substrat comprenant un polyester aromatique thermoplastique ou une polyoléfine thermoplastique de l'étape (f) est effectué par la technique de revêtement par pulvérisation, la technique de revêtement au barreau, la technique de revêtement par rotation, la technique de revêtement à l'aide d'un moule à fente, la technique d'impression à jet d'encre, la technique du revêtement par gouttes, la technique d'impression thermique électronique, ou la technique d'étiquetage dans le moule.

4. Utilisation de
• une pluralité d'agrégats sphériques transparents selon la revendication 1, en tant qu'étiquette physiquement non clonable, pour l'identification et/ou la traçabilité d'emballages transparents pour des produits cosmétiques et/ou des parfums
• de polyester aromatique thermoplastique choisi dans la liste constituée par le poly(téréphtalate de cyclohexylène diméthylène), le téréphtalate de polyéthylène, et des dérivés de ceux-ci
• ou de polyoléfine thermoplastique choisie dans la liste constituée par le polypropylène, le polyéthylène, et des dérivés de ceux-ci,
dans laquelle ladite pluralité d'agrégats
• sont intégrés dans l'emballage, et/ou
• sont déposés sur une surface externe et/ou interne de l'emballage
et dans laquelle le pourcentage en poids de la pluralité d'agrégats est inférieur à 1 % dans l'emballage.

5. Utilisation selon la revendication 4, dans laquelle l'emballage est en poly(téréphtalate de cyclohexylène diméthylène).

6. Utilisation selon l'une quelconque des revendications 4 à 5, dans laquelle la pluralité d'agrégats sphériques transparents est intégrée dans l'emballage par des techniques multicouches.

7. Utilisation selon l'une quelconque des revendications 4 à 5, dans laquelle la pluralité d'agrégats sphériques transparents est déposée sur une surface externe ou interne de l'emballage par la technique de revêtement par pulvérisation, la technique de revêtement au barreau, la technique de revêtement par rotation, la technique de revêtement à l'aide d'un moule à fente, la technique d'impression à jet d'encre, la technique du revêtement par gouttes, la technique d'impression thermique électronique, ou la technique d'étiquetage dans le moule.

8. Utilisation selon la revendication 7, dans laquelle la pluralité d'agrégats sphériques transparents est déposée sur une surface interne et externe de l'emballage par la technique d'étiquetage dans le moule.
